(19) Europäisches Patentamt
European Patent Office
Office européen des brevets

(11) EP 4 382 242 A1

(12) EUROPEAN PATENT APPLICATION
published in accordance with Art. 153(4) EPC

(43) Date of publication:
12.06.2024 Bulletin 2024/24

(21) Application number: 22853256.0

(22) Date of filing: 08.06.2022

(51) International Patent Classification (IPC):
B23K 26/21 (2014.01)   B23K 26/32 (2014.01)
C22C 38/38 (2006.01)   C22C 38/28 (2006.01)
C22C 38/22 (2006.01)   C22C 38/32 (2006.01)
C23C 2/12 (2006.01)   C23C 2/28 (2006.01)
C23C 2/40 (2006.01)

(52) Cooperative Patent Classification (CPC):
B23K 26/21; B23K 26/32; B23K 26/70;
C22C 38/02; C22C 38/04; C22C 38/06;
C22C 38/12; C22C 38/14; C22C 38/22;
C22C 38/28; C22C 38/32; C22C 38/38; C23C 2/12;
C23C 2/28; C23C 2/40

(86) International application number:
PCT/KR2022/008080

(87) International publication number:
WO 2023/013876 (09.02.2023 Gazette 2023/06)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.08.2021 KR 20210103057

(71) Applicant: POSCO Co., Ltd
Pohang-si, Gyeongsangbuk-do 37859 (KR)

(72) Inventors:
• UHM, Sang-Ho
Incheon 21985 (KR)
• KIM, Chung-Ha
Incheon 21985 (KR)
• HAN, Il-Wook
Pohang-si, Gyeongsangbuk-do 37877 (KR)

(74) Representative: Meissner Bolte Partnerschaft
mbB
Patentanwälte Rechtsanwälte
Postfach 86 06 24
81633 München (DE)

(54) TAILOR WELDED BLANK, HOT PRESS FORMED PART, AND METHOD FOR MANUFACTURING SAME

(57) According to one aspect of the present invention, it is possible to provide a tailor welded blank, a hot press formed part, and a method for manufacturing same, the tailor welded blank having a weld part that can effectively prevent deterioration of properties after hot press forming.

FIG. 1

EP 4 382 242 A1

**Description**

Technical Field

The present disclosure relates to a tailor welded blank, a hot-press formed member, and a method of manufacturing the same.

Background Art

Recently, attempts have been made to utilize ultrahigh strength hot-press formed members as structural members of automobiles to improve fuel efficiency and secure passenger safety through weight reduction of automobiles, and various studies are being conducted in related fields.

Patent Document 1 discloses such a hot-press forming technique. In Patent Document 1, after heating an Al-Si plated steel sheet to a temperature range of Ac1 or higher, the structure of the parent material consists of martensite by hot forming by a press and rapid cooling, and tensile strength of 1500 MPa or more may be secured.

On the other hand, in the case of manufacturing a tailor welded blank using an Al-Si plated steel sheet, a phenomenon in which components of the molten plating layer are mixed into the molten region may occur during laser welding. In detail, Al is a component that promotes the formation of ferrite, and due to Al mixed into the molten region, the required level of martensitization cannot be obtained in the welded joint after hot forming, and in the case in which external force is transmitted to the final part, it may cause fracturing in the welded joint or in the heat-affected zone adjacent to the welded joint. Patent Document 2 discloses a technique of performing laser welding after alloying the plating layer in order to prevent the inflow of plating layer components into the welded joint, but there is a limit in that the Al component of the plating layer cannot be completely prevented from flowing into the welded joint, even with the alloying treatment of the plating layer.

Patent Document 3 discloses a technique of partially removing a plating layer near a weld before laser welding in order to prevent an Al component from being mixed into a welded joint. As described above, when part of the plating layer near the welded portion is removed, the phenomenon in which the Al component of the plating layer flows into the welded joint may be partially mitigated, but it is essential to introduce additional equipment to remove the plating layer, and as the plating layer near the weld is partially removed, corrosion resistance in the area near the weld may be reduced.

Therefore, even if welding is performed while omitting partial or entire ablation of the plating layer, the Al component flows into the welded joint, and thus there is a demand for development of a technology in which a phenomenon in which physical properties of a welded joint or a heat-affected zone adjacent to a welded joint are degraded may be effectively prevented.

[Prior art literature]

(Patent Document 1) European Patent No. EP 0971044 A1
(Patent Document 2) European Patent No. EP 3805421 A1
(Patent Document 3) Korean Patent Application Publication No. 10-2009-0005004

Summary of Invention

Technical Problem

An aspect of the present disclosure is to provide a tailor welded blank, a hot-press formed member having a welded portion capable of effectively preventing deterioration of physical properties after hot-press forming, and a method of manufacturing the same.

The object of the present disclosure is not limited to the above. A person skilled in the art would have no difficulty in understanding the further subject matter of the present disclosure from the general content of this specification.

Solution to Problem

According to an aspect of the present disclosure, a tailor welded blank includes a first plated steel sheet including a first base steel sheet and a first Al-based plating layer on at least one surface of the first base steel sheet; a second plated steel sheet including a second base steel sheet and a second Al-based plating layer on at least one surface of the second base steel sheet; and a welded joint located between the first plated steel sheet and the second plated steel sheet and connecting the first plated steel sheet and the second plated steel sheet, and satisfying the following [Relational Expression 1] and [Relational Expression 2], wherein the welded joint satisfies the following [Relational Expression 3] when a Ni content contained in the welded joint is 2.2% by weight or more, and satisfies the following [Relational Expression 4] when the Ni content included in the welded joint is less than 2.2% by weight.

$$4.44*[C] + 0.355*[Mn] + 0.505*[Ni] + 0.148*[Cr] - [Al] - 1.388 > 0 \qquad \text{[Relational Expression 1]}$$

[Relational Expression 2]

$$1.0 < [Cr] < 8.0$$

[Relational Expression 3]

$$0.8 \leq [Ni]/[Cr] \leq 1.2$$

[Relational Expression 4]

$$0.3 \leq [Mn]/[Cr] \leq 1.1$$

In [Relational Expression 1] to [Relational Expression 4], [C], [Mn], [Ni], [Cr], and [Al] may refer to contents (weight%) of C, Mn, Ni, Cr, and Al included in the welded joint, respectively.

The welded joint may satisfy any one or more of [Relational Expression 5] and [Relational Expression 6] below.

[Relational Expression 5]

$$[Mn] \leq 4.5$$

[Relational Expression 6]

$$[Ni] \leq 9.0$$

In [Relational Expression 5] and [Relational Expression 6], [Mn] and [Ni] may refer to the contents (wt%) of Mn and Ni included in the welded joint.

The first Al-based plating layer may be any one selected from an Al-Si-based plating layer or an Al-Fe-based alloyed plating layer, and the second Al-based plating layer may be any one selected from an Al-Si-based plating layer or an Al-Fe-based alloyed plating layer.

The first base steel sheet or the second base steel sheet may include, in weight%, C: 0.01 to 0.15%, Si: 0.1 to 0.5%, Mn: 0.5 to 2.5%, P: 0.05% or less, S: 0.01% or less, Al : 0.5% or less, Ti: 0.1% or less, Cr: 0.5% or less, Mo: 0.5% or less, B: 0.01% or less, a balance of Fe and other unavoidable impurities, or in weight%, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities, or in weight%, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities.

According to an aspect of the present disclosure, a method of manufacturing a tailor welded blank includes providing a first plated steel sheet and a second plated steel sheet in which a first Al-based plating layer and a second Al-based plating layer are respectively formed on at least one surface of a first base steel sheet and a second base steel sheet; and performing butt-welding to form a welded joint to satisfy the following [Relational Expression 1] and [Relational Expression 2] by positioning the first plated steel sheet and the second plated steel sheet to be adjacent to each other and irradiating a laser beam together with supply of a filler wire, wherein, when the filler wire is a NiCr-based filler wire, the butt-welding is performed such that the welded joint satisfies the following [Relational Expression 3], and when the filler wire is a CrMn-based filler wire, the butt-welding is performed such that the welded joint satisfies the following [Relational Expression 4].

4.44*[C] + 0.355*[Mn] + 0.505*[Ni] + 0.148*[Cr] - [Al] - 1.388 > 0         [Relational Expression 1]

$$[Relational\ Expression\ 2]$$

$$1.0 < [Cr] < 8.0$$

$$[Relational\ Expression\ 3]$$

$$0.8 \leq [Ni]/[Cr] \leq 1.2$$

$$[Relational\ Expression\ 4]$$

$$0.3 \leq [Mn]/[Cr] \leq 1.1$$

In [Relational Expression 1] to [Relational Expression 4], [C], [Mn], [Ni], [Cr], and [Al] may refer to contents (weight%) of C, Mn, Ni, Cr, and Al included in the welded joint, respectively.

In the butt welding operation, butt welding may be performed such that the welded joint satisfies at least one of the following [Relational Expression 5] and [Relational Expression 6].

$$[Relational\ Expression\ 5]$$

$$[Mn] \leq 4.5$$

$$[Relational\ Expression\ 6]$$

$$[Ni] \leq 9.0$$

In [Relational Expression 5] and [Relational Expression 6], [Mn] and [Ni] may refer to the contents (wt%) of Mn and Ni included in the welded joint.

The NiCr-based filler wire may be a filler wire including, in weight%, C: 0.15 to 0.40%, Ni: 40.0 to 50.0%, Cr: 30.0 to 40.0%, Mn: 4.5% or less (including 0%), Mo: 8% or less (including 0%), Si: 0.4% or less (including 0%) and other unavoidable impurities, and the CrMn-based filler wire may be a filler wire including, in weight%, C: 0.1 to 0.25%, Cr: 30.0 to 40.0%, Mn: 8.0 to 20.0%, Ni: 5.0 to 15.0%, Si: 0.4% or less (including 0%), and other unavoidable impurities.

A dilution rate of the filler wire provided to a molten pool formed by the laser beam may be 5 to 20 area%.

An output of the laser beam may be 2 to 10 kW, and a welding speed of the laser beam may be 1 to 6 m/min.

The first Al-based plating layer or the second Al-based plating layer may be an Al-Si-based plating layer formed by immersing the first base steel sheet or the second base steel sheet in an Al-Si-based plating bath, or an Al-Fe-based alloyed plating layer formed by alloying the Al-Si-based plating layer.

Partial or entire ablation of a first plating layer or a second plating layer adjacent to the welded joint may be omitted and butt welding may be performed.

The first base steel sheet or the second base steel sheet may include, in weight%, C: 0.01 to 0.15%, Si: 0.1 to 0.5%, Mn: 0.5 to 2.5%, P: 0.05% or less, S: 0.01% or less, Al : 0.5% or less, Ti: 0.1% or less, Cr: 0.5% or less, Mo: 0.5% or less, B: 0.01% or less, a balance of Fe and other unavoidable impurities, or in weight%, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities, or in weight%, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities.

According to an aspect of the present disclosure, a hot-press formed member includes a first plated steel sheet including a first base steel sheet and a first Al-based plating layer on at least one surface of the first base steel sheet; a second plated steel sheet including a second base steel sheet and a second Al-based plating layer on at least one surface of the second base steel sheet; and a welded joint located between the first plated steel sheet and the second plated steel sheet and satisfying the following [Relational Expression 1] and [Relational Expression 2], wherein the first base steel sheet and the second base steel sheet each contain 90 area% or more of martensite as a microstructure, and the welded joint satisfies the following [Relational Expression 3] when a Ni content contained in the welded joint is 2.2% by weight or more, and satisfies the following [Relational Expression 4] when the Ni content contained in the welded joint is less than 2.2% by weight.

$$4.44*[C] + 0.355*[Mn] + 0.505*[Ni] + 0.148*[Cr] - [Al] - 1.388 > 0 \qquad \text{[Relational Expression 1]}$$

$$\text{[Relational Expression 2]}$$
$$1.0 < [Cr] < 8.0$$

$$\text{[Relational Expression 3]}$$
$$0.8 \leq [Ni]/[Cr] \leq 1.2$$

$$\text{[Relational Expression 4]}$$
$$0.3 \leq [Mn]/[Cr] \leq 1.1$$

In in [Relational Expression 1] to [Relational Expression 4], [C], [Mn], [Ni], [Cr], and [Al] may refer to contents (weight%) of C, Mn, Ni, Cr, and Al included in the welded joint, respectively.

The welded joint may satisfy any one or more of [Relational Expression 5] and [Relational Expression 6] below.

$$\text{[Relational Expression 5]}$$
$$[Mn] \leq 4.5$$

$$\text{[Relational Expression 6]}$$
$$[Ni] \leq 9.0$$

In [Relational Expression 5] and [Relational Expression 6], [Mn] and [Ni] may refer to the contents (wt%) of Mn and Ni included in the welded joint.

The first Al-based plating layer and the second Al-based plating layer may be Al-Fe-based alloying plating layers.

The first base steel sheet or the second base steel sheet may include, in weight%, C: 0.01 to 0.15%, Si: 0.1 to 0.5%, Mn: 0.5 to 2.5%, P: 0.05% or less, S: 0.01% or less, Al : 0.5% or less, Ti: 0.1% or less, Cr: 0.5% or less, Mo: 0.5% or less, B: 0.01% or less, a balance of Fe, and other unavoidable impurities, or in weight%, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, and a balance of Fe and other unavoidable impurities, or in weight%, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, and a balance of Fe and other unavoidable impurities.

When the first base steel sheet and the second base steel sheet are steel sheets of the same type, and when a hardness value (Hv) was measured for a distance of 0.3 mm with a load of 500 gf at a center of a thickness of the welded joint, an absolute value of a difference ($\Delta H_{max}$) between a maximum hardness value ($Hv_{max}$) of the welded joint and an average hardness value ($Hv_{mean}$) of the base steel sheet, and an absolute value of a difference ($\Delta H_{min}$) between a minimum hardness value ($Hv_{min}$) of the welded joint and an average hardness value ($Hv_{mean}$) of the base steel sheet may be 70 Hv or less.

When the first base steel sheet and the second base steel sheet are different types of steel sheets, and when a hardness value (Hv) was measured for a distance of 0.3 mm with a load of 500 gf at a center of a thickness of the welded joint, an maximum hardness value ($Hv_{max}$) of the welded joint may have a hardness value equal to or less than 'average hardness value ($Hv_{mean}1$) + 50Hv of a center of a relatively hard based steel sheet' among the first and second base steel sheets, and a minimum hardness value ($Hv_{min}$) of the welded joint may have a hardness value equal to or greater than 'average hardness value ($Hv_{mean}2$) -50Hv of a center of a relatively soft base steel sheet' among the first and second base steel sheets.

A fracture rate at the welded joint may be less than 3% (including 0%).

According to an aspect of the present disclosure, a method of manufacturing a hot-press formed member includes a heating operation of heating the tailor welded blank provided by the tailor welded blank manufacturing method described above to a temperature range equal to or higher than an austenitizing temperature; and a hot-press forming operation of hot-press forming the heated tailor welded blank in a water-coolable die and then immediately cooling the same to a temperature range of a martensitic transformation start temperature or lower.

The solution to the above subject matter does not enumerate all the features of the present disclosure, and various features of the present disclosure and the advantages and effects thereof will be understood in more detail with reference to detailed embodiments and examples below.

Advantageous Effects of Invention

According to an aspect of the present disclosure, provided may be a tailor welded blank in which fracture does not occur at the welded joint or in the heat-affected zone adjacent to the welded joint in the tensile test after hot forming even when welding is performed without partially or entirely ablating the plating layer.

According to an aspect of the present disclosure, a hot-press formed member having excellent crash safety as well as high strength and thus suitable for automobile anti-intrusion parts, energy absorbing parts and the like may be provided.

The effects of the present disclosure are not limited to the above, and may be interpreted to include matters that may be reasonably inferred from the matters described in this specification by those skilled in the art.

Brief Description of Drawings

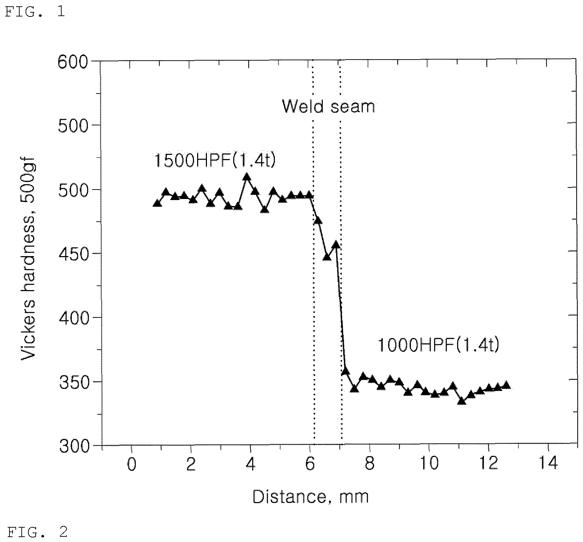

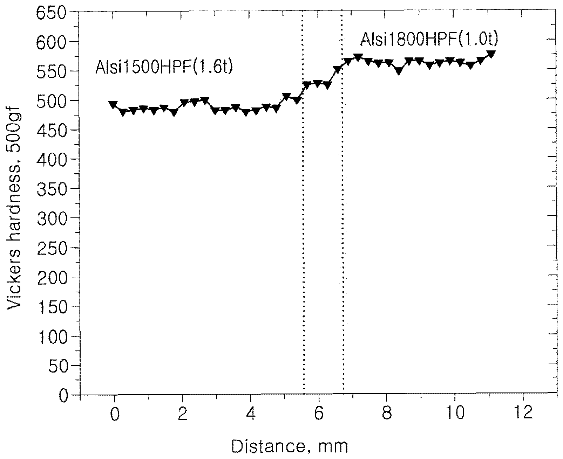

FIGS. 1 and 2 are graphs illustrating the Vickers hardness measurement results of specimen 6 and specimen 10, respectively.

Best Mode for Invention

The present disclosure relates to a tailor welded blank, a hot-press formed member, and a manufacturing method thereof, and hereinafter, preferred embodiments of the present disclosure will be described. Embodiments of The present disclosure may be modified in various forms, and the scope of the present disclosure should not be construed as being limited to the embodiments described below. These embodiments are provided to those skilled in the art to further elaborate the present disclosure.

Hereinafter, a tailor welded blank according to an aspect of the present disclosure will be described in more detail.

A tailor welded blank according to an aspect of the present disclosure may include a first plated steel sheet and a second plated steel sheet, and a welded joint provided between the first plated steel sheet and the second plated steel sheet to connect the first plated steel sheet and the second plated steel sheet. Hereinafter, a tailor welded blank having a structure in which two plated steel sheets are connected through a welded joint will be described as an example, but the present disclosure may be interpreted as a concept including a tailor welded blank having a structure in which three or more plated steel sheets are connected through a welded joint.

The first plated steel sheet may include a first base steel sheet and a first plating layer formed on at least one surface of the first base steel sheet, and the second plated steel sheet may include a second base steel sheet and a second plating layer formed on at least one surface of the second base steel sheet.

The first plating layer and the second plating layer may be Al-based plating layers, and may be any one of an Al-Si-based plating layer and an Al-Fe-based plating layer. The first plating layer and the second plating layer may be provided as the same or different types of plating layers.

As a non-limiting example, the Al-based plating layer may include, by weight%, 3 to 15% of Si, the remainder of Al, and other unavoidably introduced impurities. Impurities that inevitably flow into the Al-based plating layer may be interpreted as a concept including components that flow from the base iron.

The thickness of the first plating layer and the second plating layer is not particularly limited, and the first plating layer and the second plating layer may be provided with a thickness corresponding to that of a plated steel sheet used in the manufacture of a typical tailor welded blank.

The first base steel sheet and the second base steel sheet provided in the present disclosure are not particularly limited as long as they are hardenable by hot forming.

As a non-limiting example, the first base steel sheet and the second base steel sheet may be steel sheets provided with any one component selected from the following steel sheets 1 to 3, and the first base steel sheet and the second base steel sheet may be provided with the same type or different types of components.

Steel sheet 1: Including, by weight%, C: 0.01 to 0.15%, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, and a balance of Fe and other unavoidable impurities

Steel sheet 2: Including, by weight%, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, and a balance of Fe and other unavoidable impurities

Steel sheet 3: Including, by weight%, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, and a balance of Fe and other unavoidable impurities

As an example, steel sheet 1 may have a tensile strength of about 500 to 1000 MPa after hot forming, steel sheet 2 may have a tensile strength of about 1500 MPa after hot forming, and steel sheet 3 may have a tensile strength of about 1800 MPa to about 2000 MPa after hot forming.

The first base steel sheet and the second base steel sheet may be provided with the same or different thicknesses, and the first base steel sheet and the second base steel sheet may have a base steel sheet thickness corresponding to a plated steel sheet used for manufacturing a typical tailor welded blank. As an example, the first plated steel sheet and the second plated steel sheet may satisfy a thickness of 0.8 to 2.8 mm.

The inventor of the present disclosure conducted an in-depth study on the conditions under which fracture does not occur at the welded joint or in the heat-affected zone adjacent to the welded joint in the tensile test after hot forming even if the Al component of the plating layer partially flows into the welded joint, and recognized that the collision safety of the hot-press formed member could be secured by controlling the content of a specific alloy component included in the welded joint to be within a certain range, and derived the present disclosure.

Hereinafter, the welded joint included in the tailor welded blank according to one aspect of the present disclosure will be described in more detail.

The tailor welded blank according to one aspect of the present disclosure may satisfy both [Relational Expression 1] and [Relational Expression 2] below.

$$4.44*[C] + 0.355*[Mn] + 0.505*[Ni] + 0.148*[Cr] - [Al] - 1.388 > 0 \qquad \text{[Relational Expression 1]}$$

$$[\text{Relational Expression 2}]$$

$$1.0 < [Cr] < 8.0$$

In [Relational Expression 1] and [Relational Expression 2], [C], [Mn], [Ni], [Cr], and [Al] refer to the contents (weight %) of C, Mn, Ni, Cr, and Al included in the welded joint, respectively.

The inventor of the present disclosure recognized that stable austenitization of welded joints during heating for hot forming was an important factor in suppressing the fracture rate of welded joints, and derived [Relational Expression 1]. Even if Al, a ferrite-forming element, flows into the welded joint, by controlling the relative content ranges of C, Mn, Ni, Cr, and Al included in the welded joint as illustrated in [Relational Expression 1], the welded joint may be stably austenized in the hot forming process, and homogeneous martensite may be formed at the welded joint. That is, since in the present disclosure, the alloy components of the welded joint are controlled as in [Relational Equation 1], the fracture rate of the welded joint may be limited to a level of less than 3% during the tensile test after hot forming. A fracture rate of a preferred welded joint may be 1% or less, and a fracture rate of a more preferred welded joint may be 0%. On the other hand, in the present disclosure, the upper limit of [Relational Expression 1] is not particularly limited, but in terms of securing economic feasibility, the upper limit of [Relational Expression 1] may be limited to 5.0.

The inventor of the present disclosure confirmed that not only the relative contents of C, Mn, Ni, Cr, and Al included in the welded joint, but also the individual content range of Cr included in the welded joint are factors that have a major impact on the fracture rate of the welded joint, and derived [Relational Expression 2]. Cr is an advantageous component for securing the strength of the welded joint, and may thus be included in the welded joint at a level of 1.0% by weight or more, as illustrated in [Relational Expression 2] . A preferred Cr content may be 2.0% by weight or more, and a more preferred Cr content may be 2.5% by weight. On the other hand, since Cr is also a component that promotes the formation of ferrite, the content of Cr included in the welded joint may be limited to 8.0 wt% or less. A preferred Cr content may be 7% by weight or less, and a more preferred Cr content may be 5% by weight or less.

The tailor welded blank according to one aspect of the present disclosure may further satisfy any one of the following [Relational Expression 3] or [Relational Expression 4] according to the Ni content included in the welded joint. When the Ni content included in the welded joint is 2.2% by weight or more, the following [Relational Expression 3] is satisfied, and when the Ni content included in the welded joint is less than 2.2% by weight, the following [Relational Expression 4] may be satisfied.

$$[\text{Relational Expression 3}]$$

$$0.8 \leq [\text{Ni}]/[\text{Cr}] \leq 1.2$$

$$[\text{Relational Expression 4}]$$

$$0.3 \leq [\text{Mn}]/[\text{Cr}] \leq 1.1$$

In [Relational Expression 3] and [Relational Expression 4], [Mn], [Ni], and [Cr] refer to the contents (wt%) of Mn, Ni, and Cr included in the welded joint, respectively.

The inventor of the present disclosure confirmed that the relative contents of Ni and Cr contained in the welded joint is a major factor in securing the physical properties of the welded joint when the content of Ni contained in the welded joint is 2.2% by weight or more, and derived [Relational Expression 3].

In the case where the content of Ni contained in the welded joint is 2.2% by weight or more, and when the ratio of Ni content to Cr content in the welded joint is excessively low, the austenite formation ability of the welded joint is reduced and soft ferrite remains at room temperature, so that the physical properties of the welded joint may be poor. Therefore, when the content of Ni included in the welded joint is 2.2% by weight or more, in order to secure the physical properties of the welded joint, the ratio ([Ni]/[Cr]) of Ni content to Cr content may be limited to a level of 0.8 or higher as illustrated in [Relational Expression 3], and more preferably, may be a level of 0.85 or higher. On the other hand, when the Ni content included in the welded joint is 2.2% by weight or more, and when the ratio of the Ni content to the Cr content included in the welded joint is excessively high, the austenite stability of welded joints is excessive, and thus, austenite may remain even at room temperature. Accordingly, the deteriorated physical properties of the welded joint may be implemented. Therefore, when the content of Ni included in the welded joint is 2.2% by weight or more, in order to secure the physical properties of the welded joint, the ratio ([Ni]/[Cr]) of Ni content to Cr content may be limited to a level of 1.2 or less as illustrated in [Relational Expression 3], and more preferably, may be a level of 1.1 or less.

In the case where the content of Ni contained in the welded joint is less than 2.2% by weight, when the ratio of the Mn content to the Cr content in the welded joint is excessively low, the austenite formation ability of the welded joint is reduced and soft ferrite remains at room temperature, such that the physical properties of the welded joint may be poor. Therefore, when the content of Ni contained in the welded joint is less than 2.2% by weight, in order to secure the physical properties of the welded joint, the ratio ([Mn]/[Cr]) of Mn content to Cr content may be limited to a level of 0.3 or higher as illustrated in [Relational Expression 4], and more preferably, may be a level of 0.4 or higher. On the other hand, in the case where the content of Ni contained in the welded joint is less than 2.2% by weight, when the ratio of Mn content to Cr content in the welded joint is excessively high, the austenite stability of welded joints is excessive, and thus austenite may remain even at room temperature. Accordingly, the poor physical properties of the welded joint may be implemented. Therefore, when the content of Ni contained in the welded joint is less than 2.2% by weight, in order to secure the physical properties of the welded joint, the ratio ([Mn]/[Cr]) of Mn content to Cr content may be limited to a level of 1.1 or less as illustrated in [Relational Expression 4], and more preferably, may be a level of 1.0 or less.

The tailor welded blank according to one aspect of the present disclosure may satisfy any one or more of the following [Relational Expression 5] and [Relational Expression 6].

```
[Relational Expression 5]

[Mn] ≤ 4.5

[Relational Expression 6]

[Ni] ≤ 9.0
```

In [Relational Expression 5] and [Relational Expression 6], [Mn] and [Ni] refer to the contents (wt%) of Mn and Ni included in the welded joint.

Ni and Mn are representative austenite stabilizing elements, and are elements effectively contributing to uniform austenitization of welded joints during heating for hot forming. However, in a case in which the contents of Ni and Mn exceed a certain range, due to excessive austenite stability, austenite may be present in welded joints even at room temperature. Thus, deterioration of the physical properties of the welded joint may be caused. Therefore, as illustrated in [Relational Expression 5] and [Relational Expression 6], the contents of Mn and Ni included in the welded joint may be limited to 4.5% by weight or less and 9.0% by weight or less, respectively.

As described above, since the tailor welded blank according to one aspect of the present disclosure controls the alloy components of the welded joint, even if a plated steel sheet is welded without partial or overall ablation of the plated layer, the deterioration of physical properties caused by the inflow of the Al component of the plating layer into the welded joint may be effectively suppressed, and in the tensile test after hot forming, breakage at the welded joint or in the heat affected zone adjacent to the welded joint may be effectively prevented.

Hereinafter, a method of manufacturing a tailor welded blank according to an aspect of the present disclosure will be described in more detail.

A method of manufacturing a tailor welded blank according to an aspect of the present disclosure may include providing a plated steel sheet and performing butt welding.

In the operation of providing a plated steel sheet, a first plated steel sheet having a first Al-based plating layer formed on at least one surface of a first base steel sheet and a second plated steel sheet having a second Al-based plating layer formed on at least one surface of a second base steel sheet may be provided.

The first Al-based plating layer and the second Al-based plating layer may be Al-Si-based plating layers formed by immersing a base steel sheet in an Al-Si-based plating bath, and may be an Al-Fe-based alloying plating layer provided by performing alloying treatment after forming the Al-Si-based plating layer. The Al-Si-based plating bath may include 3 to 15% by weight of Si, the rest of Al, and other unavoidable impurities.

Since the details of the first and second base steel sheets, the first plating layer, and the second plating layer correspond to the above-described plated steel sheets, the description of the plated steel sheet provided for the manufacture of the tailor welded blank is replaced by the description of the aforementioned plated steel sheet.

In the butt welding operation, the end of the first plated steel sheet and the end of the second plated steel sheet are positioned adjacent to each other, and a welded joint may be formed by irradiating a laser beam together with supply of a filler wire. At this time, butt welding may be performed after ablation is performed on part or the entireness of the first plating layer or the second plating layer in the mutually adjacent region, but butt welding may also be performed by omitting partial or entire ablation.

The filler wire used in the butt welding of the present disclosure may be a NiCr-based filler wire or a CrMn-based filler wire. The NiCr-based filler wire may refer to a filler wire containing Ni and Cr as main components. As a non-limiting example, NiCr-based filler wire may include, in % by weight, C: 0.15 to 0.40%, Ni: 40.0 to 50.0%, Cr: 30.0 to 40.0%, Mn: 4.5% or less (including 0%), Mo: 8% or less (including 0%), Si: 0.4 % or less (including 0%) and other unavoidable impurities. The CrMn-based filler wire may refer to a filler wire containing Cr and Mn as main components. As a non-limiting example, the CrMn-based filler wire may include, in % by weight, C: 0.1 to 0.25%, Cr: 30.0 to 40.0%, Mn: 8.0 to 20.0%, Ni: 5.0 to 15.0%, Si: 0.4% or less (including 0%) and other unavoidable impurities.

In the butt welding operation, laser welding may be performed so that the welded joint formed by butt welding satisfies the following [Relational Expression 1] and [Relational Expression 2]. When butt welding is performed using NiCr-based filler wire, laser welding is performed to satisfy the following [Relational Expression 3], and when butting welding is performed using a CrMn-based filler wire, laser welding may be performed to satisfy the following [Relational Expression 4].

4.44*[C] + 0.355*[Mn] + 0.505*[Ni] + 0.148*[Cr] - [Al] - 1.388 > 0         [Relational Expression 1]

[Relational Expression 2]

$$1.0 < [Cr] < 8.0$$

[Relational Expression 3]

$$0.8 \leq [Ni]/[Cr] \leq 1.2$$

[Relational Expression 4]

$$0.3 \leq [Mn]/[Cr] \leq 1.1$$

In [Relational Expression 1] to [Relational Expression 4], [C], [Mn], [Ni], [Cr], and [Al] refer to the contents (weight %) of C, Mn, Ni, Cr, and Al included in the welded joint, respectively.

Since the reasons for limiting [Relational expression 1] to [Relational expression 4] correspond to the reasons for limiting the relational expression of the tailor welded blank described above, detailed descriptions of [Relational Expression 1] to [Relational Expression 4] are replaced with the above descriptions.

In the butt welding operation, laser welding may be performed such that the welded joint satisfies any one or more of the following [Relational Expression 5] and [Relational Expression 6].

[Relational Expression 5]

$$[Mn] \leq 4.5$$

[Relational Expression 6]

$$[Ni] \leq 9.0$$

In [Relational Expression 5] and [Relational Expression 6], [Mn] and [Ni] refer to the contents (wt%) of Mn and Ni included in the welded joint.

The reasons for limiting [Relational expression 5] and [Relational expression 6] correspond to the above-mentioned reason for limiting the above relational expressions for the tailor welded blank, and thus the detailed descriptions of [Relational Expression 5] and [Relational Expression 6] are replaced with the above description.

The alloy components of the welded joint are partially affected by the alloy components of the base steel sheet and the alloy components of the plating layer, but may be more affected by laser welding conditions. That is, the alloy component of the welded joint may be controlled by the alloy component of the filler wire used for laser welding, the dilution rate of the filler wire in the molten pool, the output of the laser beam, the welding speed of the laser beam, and the like.

In a method of manufacturing a tailor welded blank according to an aspect of the present disclosure, the filler wire used for laser welding is limited to NiCr-based filler wire or CrMn-based filler wire so that the welded joint formed by butt welding satisfies the above-described [Relational Expression 1] to [Relational Expression 6], and the dilution rate of the filler wire in the molten pool formed by the laser beam may be limited to a range of 5 to 20 area%. At this time, the output of the laser beam may satisfy the range of 2 to 10kW, and the welding speed of the laser beam may satisfy a range of 1 to 6 m/min. In butt welding, inert gases such as He, Ar and the like may be used as a protective gas to achieve the purpose of preventing oxidation of molten metal and removing fume, and the like, but are not necessarily limited thereto.

Hereinafter, a hot-press formed member and a manufacturing method thereof according to an aspect of the present disclosure will be described in more detail.

A hot-press formed member according to one aspect of the present disclosure may be provided by hot-forming the above-described tailor welded blank. That is, the hot-press formed member according to one aspect of the present disclosure may be manufacture by the heating operation of heating the above-described tailor welded blank to a temperature range equal to or higher than the austenitization temperature and hot-forming operation of hot forming the tailor welded blank heated in the water-coolable die and then immediately cooling to a temperature range equal to or lower than the start of transformation.

A hot-press formed member according to an aspect of the present disclosure may include a first plated steel sheet, a second plated steel sheet, and a welded joint connecting the first plated steel sheet and the second plated steel sheet. Since the hot-press formed member according to one aspect of the present disclosure is provided by hot-forming the above-described tailor welded blank, differences may occur in the shape, plating layer components, and microstructure of the base steel sheet compared to the above-described tailor welded blank. During the hot forming process, the plating layer may be alloyed, and some components of the base steel sheet may flow into the plating layer. Martensitization of the base steel sheet may be obtained through the heating and rapid cooling process in the hot forming process, and the base steel sheet provided in the forming member may contain martensite of about 90 area% or more (including 100%) .

By going through the hot forming process, the welded joint is also martensitized, but there is no significant change in the alloy composition of the welded joint before and after the hot forming process. Therefore, the welded joint provided in the formed member according to one aspect of the present disclosure may also satisfy the above-described [Relational Expression 1] to [Relational Expression 6].

Since the forming member according to one aspect of the present disclosure alleviates the local physical property deviation of the base steel sheet and the welded joint, the fracture rate at the welded joint may be controlled to be less than 3% (including 0%) during a tensile test on a formed member.

In the case in which the first base steel sheet and the second base steel sheet provided in the formed member are the same type of steel sheet, when the hardness value (Hv) was measured for a distance of 0.3 mm with a load of 500 gf at the center of the thickness of the welded joint, the absolute value of difference ($\Delta H_{max}$) between a maximum hardness value ($Hv_{max}$) of the welded joint and an average hardness value ($Hv_{mean}$) of the base steel sheet, and the absolute value of a difference ($\Delta H_{min}$) between a minimum hardness value ($Hv_{min}$) of the welded joint and the average hardness value ($Hv_{mean}$) of the base steel sheet, may be 70 Hv or less, respectively.

On the other hand, in the case in which the first base steel sheet and the second base steel sheet provided in the forming member are different types of steel sheets, when the hardness value (Hv) was measured for a distance of 0.3 mm with a load of 500 gf at the center of the thickness of the welded joint, the maximum hardness value ($Hv_{max}$) of the welded joint has a hardness value of 'average hardness value ($Hv_{mean}1$) of the center of the relatively hard base steel sheet + 50Hv' or lower among the first and second base steel sheets, and the minimum hardness value ($Hv_{min}$) of the welded joint may have a hardness value of 'average hardness value ($Hv_{mean}2$) of the center of the relatively soft steel sheet - 50Hv' or higher among the first and second base steel sheets.

Therefore, the formed member according to one aspect of the present disclosure not only has high strength characteristics, but also has excellent crash safety, and may thus have appropriate physical properties appropriate for anti-intrusion parts of automobiles, energy absorbing parts, and the like.

Hereinafter, the tailor welded blank of the present disclosure, the hot-press formed member, and a manufacturing method thereof will be described in more detail through specific examples. It should be noted that the following examples are only for understanding of the present disclosure, and are not intended to specify the scope of the present disclosure. The scope of the rights of the present disclosure may be determined by the matters described in the claims and the matters reasonably inferred therefrom.

Mode for Invention

Tailor welded blank specimens were prepared by applying the welding conditions described in Table 1.

The base steel sheet A in Table 1 is a base steel sheet including, in weight percent, C: 0.01 to 0.15%, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities, and refers to a steel sheet capable of securing a tensile strength of about 1000 MPa after hot forming. The base steel sheet B is a base steel sheet including, in weight percent, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities, and refers to a steel sheet capable of securing a tensile strength of about 1500Mpa after hot forming. The base steel sheet C is a base steel sheet including, in weight percent, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities, and refers to a steel sheet capable of securing a tensile strength of about 1800 MPa after hot forming. The base steel sheets A to C were manufactured to satisfy the thicknesses listed in Table 1, respectively.

Each steel sheet was immersed in an aluminum plating bath containing 4 to 15% by weight of Si, and plating was performed at a plating weight of 10 to 40 g/m$^2$ based on one side. For some, alloying treatment was additionally performed. Regarding pre-alloying, the mark "O" refers to the case where alloying treatment of the plating layer was performed before laser welding, and the mark "X" refer to the case where alloying treatment of the plating layer was not performed before laser welding.

Before laser welding, an ablation treatment was performed to remove the plating layer on the end side of the plated steel sheet for some of the specimens. Regarding the ablation treatment, the mark "O" means the case of ablation treatment, and "X" indicates a case where no ablation is performed.

Butt welding was performed at a welding speed of 1 to 3 m/min using a laser beam whose output was adjusted in the range of 3 to 5 kW, and a filler wire was fed to a molten pool formed by a laser beam at the dilution rate illustrated in Table 1. Among the filler wires illustrated in Table 1, the NiCr-based filler wire refers to a filler wire including, in % by weight, C: 0.15 to 0.40%, Ni: 40.0 to 50.0%, Cr: 30.0 to 40.0%, Mn: 4.5% or less (including 0%), Mo: 8% or less (including 0%), Si: 0.4 % or less (including 0%) and other unavoidable impurities, and the CrMn-based filler wire refers to a filler wire including, in weight percent, C: 0.1 to 0.25%, Cr: 30.0 to 40.0%, Mn: 8.0 to 20.0%, Ni: 5.0 to 15.0%, Si: 0.4% or less (including 0%) and other unavoidable impurities.

[Table 1]

| Division | First plated steel sheet | | | Second plated steel sheet | | | Ablation Application | Filler Wire | Filler wire dilution rate (area %) |
|---|---|---|---|---|---|---|---|---|---|
| | Base steel sheet | Pre-alloying | Steel sheet thickness (mm) | Base steel sheet | Pre-alloying | Steel sheet thickness (mm) | | | |
| 1 | B | o | 1.8 | B | o | 1.8 | X | NiCr-based | 12 |
| 2 | B | o | 1.8 | B | o | 1.8 | X | NiCr-based | 17 |
| 3 | B | o | 1.6 | B | o | 1.0 | X | CrMn-based | 13 |
| 4 | B | o | 1.6 | B | o | 1.0 | X | CrMn-based | 17 |
| 5 | B | o | 1.6 | B | o | 1.0 | X | NiCr-based | 7 |
| 6 | B | o | 1.4 | A | o | 1.4 | X | NiCr-based | 9 |
| 7 | B | o | 1.6 | B | o | 1.0 | X | NiCr-based | 11 |
| 8 | B | o | 1.6 | B | o | 1.0 | X | CrMn-based | 12 |
| 9 | B | o | 1.6 | B | o | 1.0 | X | NiCr-based | 15 |
| 10 | B | X | 1.6 | C | X | 1.0 | X | NiCr-based | 10 |
| 11 | B | X | 1.6 | B | X | 1.0 | X | NiCr-based | 12 |
| 12 | B | X | 1.6 | B | X | 1.0 | o | NiCr-based | 5 |
| 13 | B | o | 1.6 | B | o | 1.0 | X | CrMn-based | 8 |
| 14 | B | o | 1.6 | B | o | 1.0 | X | CrMn-based | 20 |
| 15 | B | o | 1.6 | B | o | 1.0 | X | CrMn-based | 3 |
| 16 | B | o | 1.6 | B | o | 1.0 | X | NiCr-based | 3 |
| 17 | B | o | 1.6 | B | o | 1.0 | X | NiCr-based | 30 |
| 18 | B | o | 1.6 | B | o | 1.0 | X | CrMn-based | 6 |

For each specimen in Table 1, after heating each specimen to a temperature range of 870 to 950 °C, it was maintained for 5 minutes, and hot forming was simulated by press quenching using a mold in which water cooling is possible. Each specimen was cut to form a cross section perpendicular to the welding progress direction, and welded joint alloy components in each specimen section were analyzed using EDS quantitative analysis of EPMA and SEM. In the cross section of each specimen, the welded area excluding the heat-affected zone was divided into 8 to 12 areas, and a surface analysis was performed for each area. The average value of the component content measured in each area is illustrated in Table 2. In addition, the results of substituting the contents of these components in relational expressions 1, 3, and 4 are illustrated in Table 2 together. A tensile test was conducted by taking a plurality of tensile specimens (ISO 6892-1 Type 1, the weld is located in the direction perpendicular to the tensile load at the center of the parallel part) from each specimen. The ratio (number of tensile specimens at weld breakage/number of total tensile specimens) of the number of tensile specimens in which fracture occurred at the weld to the number of tensile tests was calculated, and the fracture rate of the weld of each specimen was measured as illustrated in Table 2. The hardness value (Hv) was measured for a distance of 0.3 mm with a load of 500 gf at the center of the thickness of the welded joint using a Vickers hardness tester, and the difference ($\Delta H_{max}$) between the maximum hardness value ($Hv_{max}$) of the welded joint and the average hardness value ($Hv_{mean}$) of the base steel sheet, and the difference ($\Delta H_{min}$) between the minimum hardness value ($Hv_{min}$) of the welded joint and the average hardness value ($Hv_{mean}$) of the base steel sheet are calculated and are described together in Table 2. On the other hand, FIGS. 1 and 2 are graphs illustrating Vickers hardness measurement results of specimens 6 and 10, respectively. As illustrated in FIG. 1, it can be seen that specimen 6 has an average hardness of about 490 Hv in the parent material of the first plated steel sheet, and an average hardness of about 390 Hv in the parent material of the second plated steel sheet, and the welded joint exhibits a hardness of 446 to 474Hv. In addition, as illustrated in FIG. 2, it can be seen that specimen 10 has an average hardness of about 488Hv in the parent material of the first plated steel sheet and an average hardness of about 563 Hv in the parent material of the second plated steel sheet, and the welded joint exhibits a hardness of 525 to 551 Hv. That is, in specimens 6 and 10, the maximum hardness value ($Hv_{max}$) of the welded joint satisfies the range of 'average hardness value ($Hv_{mean}1$) of the center of a relatively hard base steel sheet + 50Hv' or lower, and the minimum hardness value ($Hv_{min}$) of the welded joint satisfies the range of 'average hardness value ($Hv_{mean}2$) of the center of a relatively soft base steel sheet - 50Hv', and thus it can be confirmed that the level is 3% or less.

[Table 2]

| Division | Alloy Component (wt%) | | | | | | | Relational Expression 1 | Relational Expression 3 | Relational Expression 4 | Weld Hardness | | Weld Fracture Rate (%) |
|---|---|---|---|---|---|---|---|---|---|---|---|---|---|
| | C | Mn | Ni | Cr | Al | Si | Mo | | | | $\Delta H$ min | $\Delta H$ max | |
| 1 | 0.22 | 1.36 | 4.36 | 4.47 | 0.97 | 0.55 | 0 | 1.96 | 0.98 | 0.30 | 30.6 | 42.6 | 0 |
| 2 | 0.22 | 1.72 | 2.46 | 2.53 | 0.8 | 0.34 | 0 | 1.02 | 0.97 | 0.68 | -26.3 | 34.7 | 0 |
| 3 | 0.22 | 2.97 | 0.76 | 2.99 | 0.99 | 0.46 | 0 | 0.48 | 0.25 | 0.99 | 8.9 | 12.1 | 0 |
| 4 | 0.21 | 3.03 | 1.07 | 4.84 | 1.17 | 0.41 | 0 | 0.71 | 0.22 | 0.63 | 17.7 | 62.7 | 0 |
| 5 | 0.22 | 2.01 | 3.2 | 2.93 | 1.05 | 0.41 | 0 | 1.30 | 1.09 | 0.69 | 2.6 | 49.6 | 0 |
| 6 | 0.15 | 2.04 | 3.91 | 3.55 | 1.05 | 0.46 | 0 | 1.45 | 1.10 | 0.57 | - | - | 0 |
| 7 | 0.22 | 1.96 | 3.42 | 4.02 | 2.28 | 1.04 | 0 | 0.33 | 0.85 | 0.49 | -25.0 | 28.3 | 0 |
| 8 | 0.22 | 2.21 | 1.32 | 3.22 | 1.04 | 0.53 | 0 | 0.48 | 0.41 | 0.69 | 55.0 | 65.0 | 0 |
| 9 | 0.22 | 1.93 | 6.83 | 6.6 | 1.23 | 0.46 | 0.59 | 3.47 | 1.03 | 0.29 | -27.0 | 29.0 | 0 |
| 10 | 0.26 | 1.8 | 4.75 | 3.87 | 1.19 | 0.47 | 0 | 2.19 | 1.23 | 0.47 | - | - | 0 |
| 11 | 0.22 | 1.99 | 4.86 | 4.82 | 2.33 | 0.42 | 0 | 1.13 | 1.01 | 0.41 | 5.7 | 14.3 | 0 |
| 12 | 0.22 | 1.92 | 2.59 | 2.57 | 0.51 | 0.39 | 0 | 1.45 | 1.01 | 0.75 | 10.0 | 24.0 | 0 |
| 13 | 0.21 | 2.13 | 0 | 2.87 | 1.31 | 0.39 | 0 | -0.58 | 0.00 | 0.74 | -0.20 | 37.6 | 100 |
| 14 | 0.19 | 4.93 | 1.44 | 8.07 | 1.15 | 1.15 | 0 | 1.98 | 0.18 | 0.61 | -5.0 | 23.0 | 100 |

(continued)

| Divi sion | Alloy Component (wt%) | | | | | | | Relat ional Expre ssion 1 | Relat ional Expre ssion 3 | Relat ional Expre ssion 4 | Weld Hardne ss | | Weld Frac ture Rate (%) |
|---|---|---|---|---|---|---|---|---|---|---|---|---|---|
| | C | Mn | Ni | Cr | Al | Si | Mo | | | | ΔH min | ΔH max | |
| 15 | 0. 22 | 1 . 45 | 0 | 0. 33 | 1 . 73 | 1 . 73 | 0 | -1.58 | 0.00 | 4.39 | - 92 . 0 | 39 .0 | 33.3 |
| 16 | 0. 22 | 1 . 38 | 1 . 36 | 1 . 25 | 1 . 12 | 0. 55 | 0 | -0.17 | 1.09 | 0.10 | - 12 3. 2 | - 28 | 70 |
| 17 | 0. 21 | 2. 07 | 12 . 8 2 | 11 .4 4 | 1 . 1 | 1 . 1 | 0 | 7.35 | 1.12 | 0.18 | -19 6. 4 | -68 . 4 | 100 |
| 18 | 0. 21 | 2. 22 | 0 | 2. 01 | 1 . 18 | 1 . 18 | 0 | -0.55 | 0.00 | 1.10 | - 10 . 7 | 20 .3 | 66.6 |

As illustrated in Tables 1 and 2, it can be seen that the specimens satisfying the conditions of the present disclosure have a weld fracture rate of less than 3 area%, while the specimens that do not satisfy the conditions of the present disclosure have a weld fracture rate significantly exceeding 3 area%.

Therefore, in the tailor welded blank according to one aspect of the present disclosure, even if welding is performed without partial or entire ablation of the plating layer, a hot-press formed member in which fracture does not occur at the welded joint or at the heat-affected zone adjacent to the welded joint in the tensile test after hot forming may be provided.

Although the present disclosure has been described in detail through examples above, other types of embodiments are also possible. Therefore, the spirit and scope of the claims set forth below are not limited to the embodiments.

**Claims**

1.  A tailor welded blank comprising:

    a first plated steel sheet including a first base steel sheet and a first Al-based plating layer on at least one surface of the first base steel sheet;
    a second plated steel sheet including a second base steel sheet and a second Al-based plating layer on at least one surface of the second base steel sheet; and
    a welded joint located between the first plated steel sheet and the second plated steel sheet and connecting the first plated steel sheet and the second plated steel sheet, and satisfying the following [Relational Expression 1] and [Relational Expression 2],
    wherein the welded joint satisfies the following [Relational Expression 3] when a Ni content contained in the welded joint is 2.2% by weight or more, and satisfies the following [Relational Expression 4] when the Ni content included in the welded joint is less than 2.2% by weight,

    4.44*[C] + 0.355*[Mn] + 0.505*[Ni] + 0.148*[Cr] - [Al] - 1.388 > 0         [Relational Expression 1]

    [Relational Expression 2]

    1.0 < [Cr] < 8.0

    [Relational Expression 3]
    0.8 ≤ [Ni]/[Cr] ≤ 1.2

[Relational Expression 4]

0.3 ≤ [Mn]/[Cr] ≤ 1.1,

in [Relational Expression 1] to [Relational Expression 4], [C], [Mn], [Ni], [Cr], and [Al] are contents (weight%) of C, Mn, Ni, Cr, and Al included in the welded joint, respectively.

2. The tailor welded blank of claim 1, wherein the first Al-based plating layer is any one selected from an Al-Si-based plating layer or an Al-Fe-based alloyed plating layer, and
the second Al-based plating layer is any one selected from an Al-Si-based plating layer or an Al-Fe-based alloyed plating layer.

3. The tailor welded blank of claim 1, wherein the first base steel sheet or the second base steel sheet includes,

in weight%, C: 0.01 to 0.15%, Si: 0.1 to 0.5%, Mn: 0.5 to 2.5%, P: 0.05% or less, S: 0.01% or less, Al : 0.5% or less, Ti: 0.1% or less, Cr: 0.5% or less, Mo: 0.5% or less, B: 0.01% or less, a balance of Fe and other unavoidable impurities,
in weight%, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities, or
in weight%, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities.

4. A method of manufacturing a tailor welded blank, comprising:

providing a first plated steel sheet and a second plated steel sheet in which a first Al-based plating layer and a second Al-based plating layer are respectively formed on at least one surface of a first base steel sheet and a second base steel sheet; and
performing butt-welding to form a welded joint to satisfy the following [Relational Expression 1] and [Relational Expression 2] by positioning the first plated steel sheet and the second plated steel sheet to be adjacent to each other and irradiating a laser beam together with supply of a filler wire,
wherein, when the filler wire is a NiCr-based filler wire, the butt-welding is performed such that the welded joint satisfies the following [Relational Expression 3], and when the filler wire is a CrMn-based filler wire, the butt-welding is performed such that the welded joint satisfies the following [Relational Expression 4],

$4.44*[C] + 0.355*[Mn] + 0.505*[Ni] + 0.148*[Cr] - [Al] - 1.388 > 0$        [Relational Expression 1]

[Relational Expression 2]

1.0 < [Cr] < 8.0

[Relational Expression 3]

0.8 ≤ [Ni]/[Cr] ≤ 1.2

[Relational Expression 4]

0.3 ≤ [Mn]/[Cr] ≤ 1.1,

in [Relational Expression 1] to [Relational Expression 4], [C], [Mn], [Ni], [Cr], and [Al] are contents (weight%) of C, Mn, Ni, Cr, and Al included in the welded joint, respectively.

5. The method of manufacturing a tailor welded blank of claim 4, wherein the NiCr-based filler wire is a filler wire including, in weight%, C: 0.15 to 0.40%, Ni: 40.0 to 50.0%, Cr: 30.0 to 40.0%, Mn: 4.5% or less (including 0%), Mo: 8% or less (including 0%), Si: 0.4% or less (including 0%) and other unavoidable impurities, and
the CrMn-based filler wire is a filler wire including, in weight%, C: 0.1 to 0.25%, Cr: 30.0 to 40.0%, Mn: 8.0 to 20.0%, Ni: 5.0 to 15.0%, Si: 0.4% or less (including 0%), and other unavoidable impurities.

6. The method of manufacturing a tailor welded blank of claim 4, wherein a dilution rate of the filler wire provided to a molten pool formed by the laser beam is 5 to 20 area%.

7. The method of manufacturing a tailor welded blank of claim 4, wherein an output of the laser beam is 2 to 10 kW, and a welding speed of the laser beam is 1 to 6 m/min.

8. The method of manufacturing a tailor welded blank of claim 4, wherein the first Al-based plating layer or the second Al-based plating layer is,

   an Al-Si-based plating layer formed by immersing the first base steel sheet or the second base steel sheet in an Al-Si-based plating bath, or
   an Al-Fe-based alloyed plating layer formed by alloying the Al-Si-based plating layer.

9. The method of manufacturing a tailor welded blank of claim 4, wherein partial or entire ablation of a first plating layer or a second plating layer adjacent to the welded joint is omitted and butt welding is performed.

10. The method of manufacturing a tailor welded blank of claim 4, wherein the first base steel sheet or the second base steel sheet includes,

    in weight%, C: 0.01 to 0.15%, Si: 0.1 to 0.5%, Mn: 0.5 to 2.5%, P: 0.05% or less, S: 0.01% or less, Al : 0.5% or less, Ti: 0.1% or less, Cr: 0.5% or less, Mo: 0.5% or less, B: 0.01% or less, a balance of Fe and other unavoidable impurities,
    in weight%, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities, or
    in weight%, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, a balance of Fe and other unavoidable impurities.

11. A hot-press formed member comprising:

    a first plated steel sheet including a first base steel sheet and a first Al-based plating layer on at least one surface of the first base steel sheet;
    a second plated steel sheet including a second base steel sheet and a second Al-based plating layer on at least one surface of the second base steel sheet; and
    a welded joint located between the first plated steel sheet and the second plated steel sheet and satisfying the following [Relational Expression 1] and [Relational Expression 2],
    wherein the first base steel sheet and the second base steel sheet each contain 90 area% or more of martensite as a microstructure, and
    the welded joint satisfies the following [Relational Expression 3] when a Ni content contained in the welded joint is 2.2% by weight or more, and satisfies the following [Relational Expression 4] when the Ni content contained in the welded joint is less than 2.2% by weight,

    $$4.44*[C] + 0.355*[Mn] + 0.505*[Ni] + 0.148*[Cr] - [Al] - 1.388 > 0 \qquad \text{[Relational Expression 1]}$$

[Relational Expression 2]

$$1.0 < [Cr] < 8.0$$

[Relational Expression 3]

$$0.8 \leq [Ni]/[Cr] \leq 1.2$$

[Relational Expression 4]

$$0.3 \leq [Mn]/[Cr] \leq 1.1,$$

in in [Relational Expression 1] to [Relational Expression 4], [C], [Mn], [Ni], [Cr], and [Al] are contents (weight%) of C, Mn, Ni, Cr, and Al included in the welded joint, respectively.

**12.** The hot-press formed member of claim 11, wherein the first Al-based plating layer and the second Al-based plating layer are Al-Fe-based alloying plating layers.

**13.** The hot-press formed member of claim 11, wherein the first base steel sheet or the second base steel sheet includes,

in weight%, C: 0.01 to 0.15%, Si: 0.1 to 0.5%, Mn: 0.5 to 2.5%, P: 0.05% or less, S: 0.01% or less, Al : 0.5% or less, Ti: 0.1% or less, Cr: 0.5% or less, Mo: 0.5% or less, B: 0.01% or less, a balance of Fe, and other unavoidable impurities,
in weight%, C: more than 0.15% and 0.25% or less, Si: 0.1 to 0.5%, Mn: 0.5 to 2.5%, P: 0.05% or less, S: 0.01% or less, Al: 0.5% or less, Ti: 0.1% or less, Cr: 0.5% or less, Mo: 0.5% or less, B: 0.01% or less, and a balance of Fe and other unavoidable impurities, or
in weight%, C: more than 0.25% and 0.45% or less, Si: 0.3 to 1.0%, Mn: 0.3 to 1.2%, P: 0.05% or less, S: 0.01% or less, Al: 0.5% or less, Ti: 0.1% or less, Cr: 0.5% or less, Mo: 0.5% or less, B: 0.01% or less, and a balance of Fe and other unavoidable impurities.

**14.** The hot-press formed member of claim 13, wherein when the first base steel sheet and the second base steel sheet are steel sheets of the same type, and when a hardness value (Hv) was measured for a distance of 0.3 mm with a load of 500 gf at a center of a thickness of the welded joint, an absolute value of a difference ($\Delta H_{max}$) between a maximum hardness value ($Hv_{max}$) of the welded joint and an average hardness value ($Hv_{mean}$) of the base steel sheet, and an absolute value of a difference ($\Delta H_{min}$) between a minimum hardness value ($Hv_{min}$) of the welded joint and an average hardness value ($Hv_{mean}$) of the base steel sheet are 70 Hv or less.

**15.** The hot-press formed member of claim 13, wherein when the first base steel sheet and the second base steel sheet are different types of steel sheets, and when a hardness value (Hv) was measured for a distance of 0.3 mm with a load of 500 gf at a center of a thickness of the welded joint, an maximum hardness value ($Hv_{max}$) of the welded joint has a hardness value equal to or less than 'average hardness value ($Hv_{mean}1$) + 50Hv of a center of a relatively hard based steel sheet' among the first and second base steel sheets, and a minimum hardness value ($Hv_{min}$) of the welded joint has a hardness value equal to or greater than 'average hardness value ($Hv_{mean}2$)-50Hv of a center of a relatively soft base steel sheet' among the first and second base steel sheets.

**16.** The hot-press formed member of claim 11, wherein a fracture rate at the welded joint is less than 3% (including 0%) .

**17.** A method of manufacturing a hot-press formed member, comprising:

a heating operation of heating the tailor welded blank provided by the manufacturing method of any one of claims 4 to 10 to a temperature range equal to or higher than an austenitizing temperature; and
a hot-press forming operation of hot-press forming the heated tailor welded blank in a water-coolable die and then immediately cooling the same to a temperature range of a martensitic transformation start temperature or lower.

FIG. 1

FIG. 2

## INTERNATIONAL SEARCH REPORT

| International application No. |
|---|
| **PCT/KR2022/008080** |

**A. CLASSIFICATION OF SUBJECT MATTER**

**B23K 26/21**(2014.01)i; **B23K 26/32**(2006.01)i; **C22C 38/38**(2006.01)i; **C22C 38/28**(2006.01)i; **C22C 38/22**(2006.01)i; **C22C 38/32**(2006.01)i; **C23C 2/12**(2006.01)i; **C23C 2/28**(2006.01)i; **C23C 2/40**(2006.01)i

According to International Patent Classification (IPC) or to both national classification and IPC

**B. FIELDS SEARCHED**

Minimum documentation searched (classification system followed by classification symbols)

B23K 26/21(2014.01); B23K 26/20(2006.01); B23K 26/211(2014.01); B23K 26/30(2006.01); B23K 26/32(2006.01); B23K 35/30(2006.01); C22C 19/05(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 강판(steel plate), 도금(plating), 용접(welding), 알루미늄(aluminium), 니켈(nickel), 망간(manganese), 크롬(chromium), 블랭크(blank), 레이저(laser), 삭마(ablation), 마르텐사이트(martensite), 오스테나이트(austenite), 열간 성형(heat forming)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0068531 A (NIPPON STEEL & SUMITOMO METAL CORPORATION) 19 June 2017 (2017-06-19)<br>See paragraphs [0039], [0051], [0133], [0142], [0155]-[0169] and [0172]; claims 1, 8 and 13; and table 1. | 1-4,7,8,10 |
| Y | | 5,6,9,17 |
| A | | 11-16 |
| Y | JP 2013-094827 A (NIPPON STEEL & SUMITOMO METAL CORP.) 20 May 2013 (2013-05-20)<br>See paragraphs [0062]-[0068], [0073] and [0081]. | 5 |
| Y | KR 10-2015-0036280 A (SHILOH INDUSTRIES, INC.) 07 April 2015 (2015-04-07)<br>See paragraphs [0004], [0020], [0022] and [0026] and figures 4 and 5. | 6,17 |

✓ Further documents are listed in the continuation of Box C. ✓ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 September 2022** | **15 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2022/008080**

### C.    DOCUMENTS CONSIDERED TO BE RELEVANT

| Category* | Citation of document, with indication, where appropriate, of the relevant passages | Relevant to claim No. |
|---|---|---|
| Y | KR 10-2016-0061560 A (HYUNDAI MOTOR COMPANY) 01 June 2016 (2016-06-01)<br>See paragraphs [0029], [0035] and [0050]. | 9 |
| A | KR 10-2014-0071581 A (HYUNDAI HYSCO CO., LTD. et al.) 12 June 2014 (2014-06-12)<br>See paragraphs [0030] and [0031] and claim 1. | 1-17 |

Form PCT/ISA/210 (second sheet) (July 2019)

**INTERNATIONAL SEARCH REPORT**
Information on patent family members

| International application No. |
| --- |
| **PCT/KR2022/008080** |

| Patent document cited in search report | | | Publication date (day/month/year) | Patent family member(s) | | | Publication date (day/month/year) |
| --- | --- | --- | --- | --- | --- | --- | --- |
| KR | 10-2017-0068531 | A | 19 June 2017 | BR | 112017008578 | A2 | 26 December 2017 |
| | | | | CA | 2964729 | A1 | 26 May 2016 |
| | | | | CN | 107002191 | A | 01 August 2017 |
| | | | | EP | 3222745 | A1 | 27 September 2017 |
| | | | | ES | 2749205 | T3 | 19 March 2020 |
| | | | | JP | 6399106 | B2 | 03 October 2018 |
| | | | | KR | 10-1928227 | B1 | 11 December 2018 |
| | | | | MX | 2017006218 | A | 31 July 2017 |
| | | | | US | 10697486 | B2 | 30 June 2020 |
| | | | | US | 2017-0350434 | A1 | 07 December 2017 |
| | | | | WO | 2016-080488 | A1 | 26 May 2016 |
| JP | 2013-094827 | A | 20 May 2013 | CN | 104023903 | A | 03 September 2014 |
| | | | | JP | 5170297 | B1 | 27 March 2013 |
| | | | | WO | 2013-065521 | A1 | 10 May 2013 |
| KR | 10-2015-0036280 | A | 07 April 2015 | CN | 104334349 | A | 04 February 2015 |
| | | | | CN | 104395030 | A | 04 March 2015 |
| | | | | CN | 104822485 | A | 05 August 2015 |
| | | | | CN | 105050760 | A | 11 November 2015 |
| | | | | EP | 2855070 | A1 | 08 April 2015 |
| | | | | EP | 2866966 | A1 | 06 May 2015 |
| | | | | EP | 2925483 | A1 | 07 October 2015 |
| | | | | EP | 2969347 | A1 | 20 January 2016 |
| | | | | EP | 3620255 | A1 | 11 March 2020 |
| | | | | JP | 2015-523210 | A | 13 August 2015 |
| | | | | JP | 2015-525677 | A | 07 September 2015 |
| | | | | JP | 2015-536246 | A | 21 December 2015 |
| | | | | JP | 2016-515943 | A | 02 June 2016 |
| | | | | JP | 2017-209733 | A | 30 November 2017 |
| | | | | JP | 6034490 | B2 | 30 November 2016 |
| | | | | JP | 6053918 | B2 | 27 December 2016 |
| | | | | JP | 6121045 | B2 | 26 April 2017 |
| | | | | JP | 6480342 | B2 | 06 March 2019 |
| | | | | KR | 10-1728769 | B1 | 20 April 2017 |
| | | | | KR | 10-1744039 | B1 | 07 June 2017 |
| | | | | KR | 10-1860776 | B1 | 25 May 2018 |
| | | | | KR | 10-2015-0023427 | A | 05 March 2015 |
| | | | | KR | 10-2015-0086485 | A | 28 July 2015 |
| | | | | KR | 10-2015-0127693 | A | 17 November 2015 |
| | | | | KR | 10-2018-0034706 | A | 04 April 2018 |
| | | | | MX | 2014014281 | A | 12 May 2015 |
| | | | | MX | 2014015552 | A | 30 October 2015 |
| | | | | MX | 2015006795 | A | 14 August 2015 |
| | | | | MX | 2015012678 | A | 16 February 2016 |
| | | | | MX | 350136 | B | 28 August 2017 |
| | | | | MX | 353799 | B | 30 January 2018 |
| | | | | US | 10821546 | B2 | 03 November 2020 |
| | | | | US | 11198195 | B2 | 14 December 2021 |
| | | | | US | 2013-0316185 | A1 | 28 November 2013 |
| | | | | US | 2014-0003860 | A1 | 02 January 2014 |
| | | | | US | 2014-0151347 | A1 | 05 June 2014 |

Form PCT/ISA/210 (patent family annex) (July 2019)

**INTERNATIONAL SEARCH REPORT**
**Information on patent family members**

International application No.

**PCT/KR2022/008080**

| Patent document cited in search report | | | Publication date (day/month/year) | Patent family member(s) | | | Publication date (day/month/year) |
|---|---|---|---|---|---|---|---|
| | | | | US | 2014-0270922 | A1 | 18 September 2014 |
| | | | | US | 2017-0173734 | A1 | 22 June 2017 |
| | | | | US | 2018-0193949 | A1 | 12 July 2018 |
| | | | | US | 9289855 | B2 | 22 March 2016 |
| | | | | US | 9604311 | B2 | 28 March 2017 |
| | | | | US | 9956636 | B2 | 01 May 2018 |
| | | | | WO | 2013-177590 | A1 | 28 November 2013 |
| | | | | WO | 2014-005041 | A1 | 03 January 2014 |
| | | | | WO | 2014-085818 | A1 | 05 June 2014 |
| | | | | WO | 2014-153096 | A1 | 25 September 2014 |
| KR | 10-2016-0061560 | A | 01 June 2016 | CN | 106141433 | A | 23 November 2016 |
| | | | | DE | 102015206318 | A1 | 25 May 2016 |
| | | | | KR | 10-1714121 | B1 | 09 March 2017 |
| | | | | US | 2016-0144456 | A1 | 26 May 2016 |
| | | | | US | 9873929 | B2 | 23 January 2018 |
| KR | 10-2014-0071581 | A | 12 June 2014 | BR | 112013028391 | A2 | 24 October 2017 |
| | | | | CN | 104023899 | A | 03 September 2014 |
| | | | | EP | 2737971 | A1 | 04 June 2014 |
| | | | | EP | 3552754 | A1 | 16 October 2019 |
| | | | | JP | 2015-510453 | A | 09 April 2015 |
| | | | | JP | 5873934 | B2 | 01 March 2016 |
| | | | | KR | 10-1448473 | B1 | 10 October 2014 |
| | | | | US | 2014-0154521 | A1 | 05 June 2014 |
| | | | | US | 2015-0165726 | A1 | 18 June 2015 |
| | | | | US | 9381720 | B2 | 05 July 2016 |
| | | | | US | 9884468 | B2 | 06 February 2018 |
| | | | | WO | 2014-088170 | A1 | 12 June 2014 |

Form PCT/ISA/210 (patent family annex) (July 2019)

23

**REFERENCES CITED IN THE DESCRIPTION**

**Patent documents cited in the description**

- EP 0971044 A1
- EP 3805421 A1
- KR 1020090005004